**Europäisches Patentamt**

**European Patent Office**

**Office européen des brevets**

(19)

(11) Veröffentlichungsnummer: **0 230 076**
**A2**

# (12) EUROPÄISCHE PATENTANMELDUNG

(21) Anmeldenummer: 86202289.4

(22) Anmeldetag: 16.12.86

(51) Int. Cl.⁴: **H04N 1/40**

(30) Priorität: 20.12.85 DE 3545157

(43) Veröffentlichungstag der Anmeldung:
**29.07.87 Patentblatt 87/31**

(84) Benannte Vertragsstaaten:
**DE FR GB**

(71) Anmelder: **Philips Patentverwaltung GmbH**
**Billstrasse 80**
**D-2000 Hamburg 28(DE)**
**DE**
Anmelder: **N.V. Philips' Gloeilampenfabrieken**
**Groenewoudseweg 1**
**NL-5621 BA Eindhoven(NL)**
**FR GB**

(72) Erfinder: **Ehlers, Bernd**
**Falkenweg 5**
**D-2200 Elmshorn(DE)**
Erfinder: **Renelt, Gerhard, Dr.**
**Wiebischenkamp 41**
**D-2000 Hamburg 54(DE)**

(74) Vertreter: **Poddig, Dieter et al**
**Philips Patentverwaltung GmbH Billstrasse**
**80 Postfach 10 51 49**
**D-2000 Hamburg 28(DE)**

(54) **Verfahren und Anschaltungsanordnung zur Auflösungsumwandlung von binären Pseudo-Halbtonbildern.**

(57) Zur Auflösungsumwandlung wird das umzuwandelnde Pseudo-Halbtonbild in Bildfelder zerlegt, deren Größe von dem Verhältnis der Auflösungsumwandlung und der bei der Umwandlung des abgetasteten analogen Bildes in das Pseudo-Halbtonbild verwendeten Schwellwertmatrix abhängt. Jedes Bildfeld wird in Unterfelder eingeteilt, aus denen jeweils entsprechend dem Verhältnis der Auflösungsumwandlung eine bestimmte Anzahl von Bildpunkten entnommen wird. Die Lage dieser entnommenen bzw. ausgewählten Bildpunkte in verschiedenen Unterfeldern eines Bildfeldes ist verschieden, so daß alle Bildpunkte bzw. alle zu den Bildpunkten gehörenden Schwellwerte gleichmäßig berücksichtigt sind. Dadurch wird eine Verfälschung des Bildes bei der Umwandlung der Auflösung vermieden.

Fig. 2

### "Verfahren und Schaltungsanordnung zur Auflösungsumwandlung von binären Pseudo-Halbtonbildern"

Die Erfindung betrifft ein Verfahren zum Umwandeln eines Pseudo-Halbtonbildes aus von binären Bildpunkten, deren Werte gemäß dem Ordered Dither-Verfahren aus der Abtastung einer Vorlage und Vergleich des Abtastsignals von jeweils in einem Bildausschnitt mit i Zeilen und j Spalten angeordneten Bildpunkten mit einem Satz von verschiedenen Schwellwerten, die in einer Matrix mit ebenfalls i Zeilen und j Spalten angeordnet sind, gewonnen sind, in ein zweites Pseudo-Halbtonbild derart, daß $n^2$ Bildpunkten des ersten Bildes $m^2$ Punkte des zweiten Bildes entsprechen, mit m $\neq$ n, vorzugsweise m < n, sowie eine Schaltungsanordnung zur Durchführung des Verfahrens.

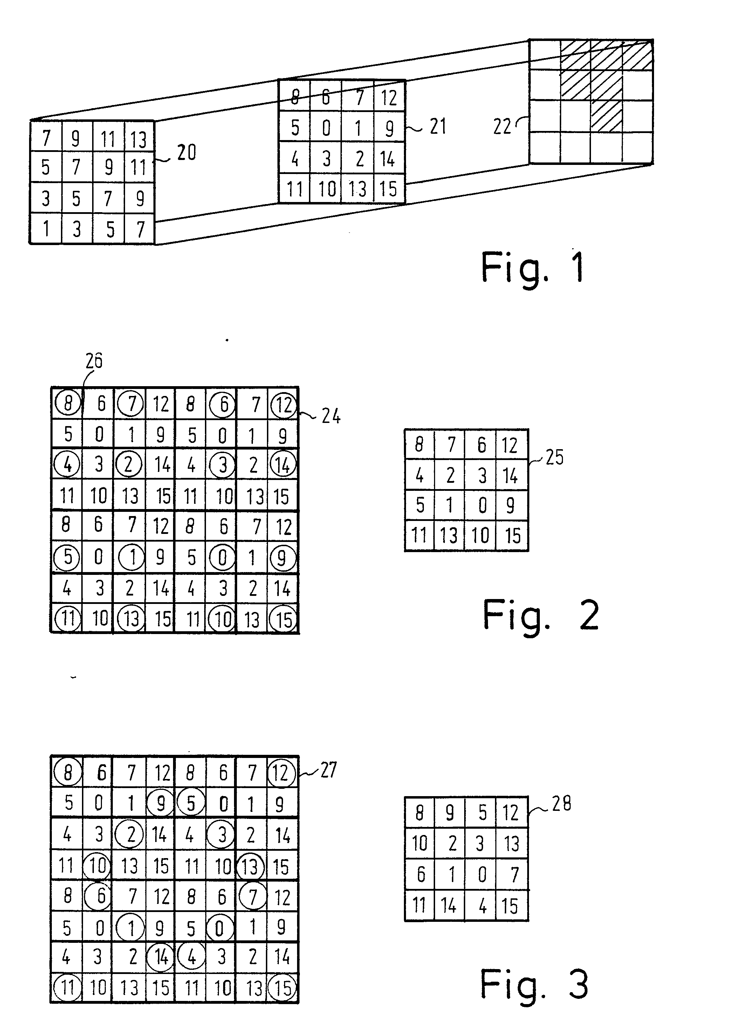

Das Ordered Dither-Verfahren ist beispielsweise bekannt aus Bell System Techn. Journal, 48, 1969, S. 2555-2582 und wird verwendet, um mit Hilfe von Matrixdruckern oder Bildschirmgeräten, die nur Bildpunkte gleicher Größe und Intensität darstellen können, Pseudo-Halbtonbilder aufzuzeichnen, die einen guten Halbtoneindruck vermitteln. Dieses bekannte Verfahren soll anhand der Fig. 1 näher erläutert werden. Darin stellt der Bildausschnitt 20 einen Teil aus einem abgetasteten Halbtonbild in der Größe von vier x vier Bildpunkten dar, wobei in diesen Bildpunkten die darin eingetragenen Zahlen den Helligkeitswert oder Grauwert des betreffenden Bildpunktes angeben. Ein hoher Wert bedeutet dabei ein dunkler Bildpunkt, so daß zu erkennen ist, daß in dem Bildausschnitt 20 die Bildpunkte von links unten diagonal nach rechts oben dunkler werden. Um daraus ein binäres Pseudo-Halbtonbild zu erzeugen, wird der Bildausschnitt 20 von Bildpunkten mit einer Matrix 21 von Schwellwerten verglichen. Wenn der Helligkeitswert oder Grauton des Bildpunktes größer als der an der gleichen Stelle der Matrix 21 angegebene Schwellwert ist, wird ein Punkt aufgezeichnet. Die sich so ergebenden binären Bildpunkte sind in dem Bildausschnitt 22 dargestellt. Tatsächlich sind die Bildausschnitte 20 bzw. 22 so klein, daß beim Pseudo-Halbtonbild die einzelnen Bildpunkte bei Betrachtung im normalen Abstand verschwimmen und ein Grautoneindruck entsteht, der von der Anzahl der schwarzen Bildpunkte in jedem Bildausschnitt 22 abhängt.

Die mit dem beschriebenen Ordered Dither-Verfahren gewonnenen binären Pseudo-Halbtonbilder können nun übertragen bzw. gespeichert werden. Die Wiedergabe erfolgt mit Geräten, die dieselbe Auflösung, d.h. dieselbe Anzahl der Punkte pro Millimeter aufweisen, wenn verlangt wird, daß die Bildgröße erhalten bleibt.

Wenn man ein solches übertragenes bzw. gespeichertes Bild mit einem Gerät anderer Auflösung, d.h. anderer Anzahl Punkte pro Millimeter, bei gleicher Bildgröße wiedergeben will, müssen bei größerer Auflösung Bildpunkte vervielfacht oder bei geringerer Auflösung Bildpunkte ausgelassen werden. Wenn dies in der Form geschieht, daß in regelmäßigen Abständen liegende Bildzeilen und Bildspalten unterdrückt oder verdoppelt werden, abhängig von einer geforderten Erhöhung oder Verringerung der Auflösung, wird zumindest bei bestimmten Verhältnissen der Auflösungsveränderung und bestimmten Größen bzw. Anordnungen der Schwellwerte in der Matrix 21 der optische Eindruck verfälscht, denn wenn insbesondere bei Auslassung von Bildzeilen und Spalten immer solche betroffen sind, die zu denselben Zeilen und Spalten der Matrix 21 gehören, gehen die entsprechenden Halbtöne verloren. Außerdem kann die Auflösungsveränderung durch die Überlagerung von verschiedenen Rastern zu groben Strukturen führen.

Aufgabe der Erfindung ist es daher, ein Verfahren der eingangs genannten Art anzugeben, bei dem in dem zweiten Pseudo-Halbtonbild die mittlere Verteilung der Halbtöne im wesentlichen unverändert bleibt und dieses zweite PseudoHalbtonbild dem ersten Pseudo-Halbtonbild möglichst ähnlich ist.

Diese Aufgabe wird erfindungsgemäß dadurch gelöst, daß das erste Bild in aneinandergrenzende Bildfelder von je i.n x j.n Bildpunkten mit aneinandergrenzenden quadratischen Unterfeldern von je n x n Bildpunkten aufgeteilt wird und daß aus jeweils einem Unterfeld $m^2$ Bildpunkte für das zweite Bild nach einer für jedes Bildfeld gleichen festen Auswahlfolge und nur abhängig von der Lage des Unterfeldes im Bildfeld derart ausgewählt werden, daß Bildpunkte von allen Positionen der Matrix im wesentlichen gleich oft berücksichtigt sind.

In dem auf diese Weise entstehenden zweiten Pseudo-Halbtonbild sind mit allen verschiedenen Schwellwerten gewonnene Bildpunkte des ersten Pseudo-Halbtonbild enthalten, so daß dessen optischer Eindruck im wesentlichen erhalten bleibt, abgesehen von einem Informationsverlust, der bei Auflösungsverringerung grundsätzlich unvermeidbar ist. Durch die stets feste Auswahlfolge für alle Bildfelder ergibt sich eine einfache technische Realisierung des erfindungsgemäßen Verfahrens.

Für die spezielle Ausgestaltung der Auswahlfolge bestehen verschiedene Möglichkeiten. Für eine Auflösungsumwandlung mit möglichst geringer Verfälschung ist es zweckmäßig, daß die Bildpunkte für das zweite Bild aus allen Zeilen und allen Spalten des Bildfeldes des ersten Bildes ausgewählt werden. Dies ergibt eine bereits über verhältnismäßig kleine Bildbereiche weitgehend gleichmäßige Verteilung der berücksichtigten Bildpunkte.

Für einen besonders geringen Aufwand bei der technischen Realisierung kann es jedoch zweckmäßig sein, daß die Bildpunkte für das zweite Bild aus nur einigen Zeilen und/oder einigen Spalten des Bildfeldes des ersten Bildes ausgewählt werden. Dies bedeutet, daß einzelne Zeilen und/oder Spalten ganz weggelassen werden, wobei diese Zeilen und/oder Spalten innerhalb jedes Bildfeldes jedoch keine völlig periodische Struktur bilden. Eine besonders einfache Realisierungsmoglichkeit ergibt sich, wenn nach einer weiteren Ausgestaltung des erfindungsgemäßen Verfahrens nur die an Kreuzungspunkten von einem Teil der Zeilen und Spalten liegenden Bildpunkte des Bildfeldes des ersten Bildes für das zweite Bild ausgewählt werden.

Die Verteilung der Schwellwerte in der Matrix 21 in Fig. 1 bestimmt in einem gewissen Masse den optischen Eindruck des aus dem abgetasteten Bild gewonnenen ersten Pseudo-Halbtonbildes bzw. die Ahnlichkeit zwischen diesen Bildern. Aus diesem Grunde ist es zweckmäßig, daß nach einer weiteren Ausgestaltung des erfindungsgemäßen Verfahrens die Auswahl der Bildpunkte für das zweite Bild und die Anordnung der aus einem Bildfeld ausgewählten Bildpunkte in Form einer Ausgangsmatrix derart erfolgt, daß diese im wesentlichen der Matrix der Bildpunkte des ersten Bildes entspricht. Auf diese Weise sind in dem zweiten Pseudo-Halbtonbild die Schwellwerte der Matrix 21 in Fig. 1 im wesentlichen in gleicher Anordnung wirksam.

Eine Anordnung zur Durchführung des erfindungsgemäßen Verfahrens mit mindestens einem Eingang zum Zuführen der Bildpunktsignale aufeinanderfolgender Bildpunkte des ersten Pseudo-Halbtonbildes und mit mindestens einem Ausgang zum Abgeben der Bildpunktsignale der Bildpunkte des zweiten Pseudo-Halbtonbildes ist dadurch gekennzeichnet, daß jedem Eingang ein Datenschalter nachgeschaltet ist und daß eine Steuereinrichtung vorgesehen ist, die von mit dem Empfangen der Bildpunktsignale des ersten Bildes synchronen Taktsignalen gesteuert die Datenschalter zyklisch betätigt, wobei die Zyklusdauer dem Empfangen der Bildpunktsignale aus jeweils einer vorgegebenen Anzahl Bildzeilen eines Bildfeldes oder einer Zeile von Bildfeldern entspricht und der Zyklus nach einer vorgegebenen zweiten Anzahl von Bildzeilen geändert wird, und die Datenschalter entsprechend der Betätigung die den Eingängen zugeführten Bildpunktsignale unterdrücken oder zum Ausgang weiterleiten. Da die Bildpunktsignale nur binäre Signale sind, können für die Datenschalter einfache Verknüpfungsschaltungen bzw. Multiplexer verwendet werden, während wegen der festen Auswahlfolge die Steuereinrichtung relativ einfach und systematisch aufgebaut werden kann. Insbesondere ist es zweckmäßig, daß die Steuereinrichtung einen Speicher enthält, der von einem Zähler adressiert ist, der die Taktsignale als Zählsignale empfängt.

Eine derartige Anordnung kann mit einem Eingang zum seriellen Empfangen der aufeinanderfolgenden Bildpunktsignale des ersten Pseudo-Halbtonbildes eingerichtet sein, wobei dann nur ein einziger Datenschalter erforderlich ist. Eine Anordnung mit mehreren Eingängen zum parallelen Zuführen von Bildpunktsignalen aus jeweils einer Gruppe von benachbarten Bildzeilen ist zweckmäßig dadurch gekennzeichnet, daß mehrere Datenschalter vorhanden sind, die je die Bildsignale eines anderen Unterfeldes eines Bildfeldes empfangen und daraus entsprechend den Steuersignalen der Steueranordnung bestimmte Bildsignale davon auswählen und an Ausgängen parallel abgeben, und daß die Steueranordnung die Betätigung der Datenschalter erst nach Empfang einer vorgegebenen Anzahl von Gruppen von Bildzeilen ändert. Wenn hierbei die Steuereinrichtung wieder aus einem von einem Zähler adressierten Speicher besteht, kann dieser Speicher einen geringeren Umfang haben, da sich seine Adressierung nur nach einer vorgegebenen Anzahl von Gruppen von Bildzeilen ändert.

Eine Anordnung zur Durchführung der Ausgestaltung des Verfahrens, bei dem nur die an Kreuzungspunkten von einem Teil der Zeilen und Spalten liegenden Bildpunkte jedes Bildfeldes des ersten Bildes für das zweite Bild ausgewählt werden, ist dadurch gekennzeichnet, daß mehrere Datenschalter vorhanden sind, die Bildpunktsignale nur von solchen Zeilen und/oder Spalten mehrerer nebeneinanderliegender Unterfelder empfangen, aus denen mindestens ein Bildpunkt für das zweite Bild ausgewählt wird, und daß die Steuereinrichtung ein Zähler ist, der die Datenschalter direkt steuert und mit jeder neuen Zeile bzw. Gruppe von Zeilen weiterschaltet. Hierbei ergibt sich eine Verringerung des Aufwandes dadurch, daß die Bildpunkte von bestimmten Zeilen und Spalten des Bildfeldes überhaupt nicht berücksichtigt werden und die entsprechenden Bildpunktsignale auch der Anordnung gar nicht erst zugeführt werden, so daß die dafür sonst erforderlichen Datenschalter weggelassen sind. Andererseits ergibt sich dann eine derartig regelmäßige Auswahlfolge, daß diese von einem Zähler gesteuert werden kann.

Ausführungsbeispiele der Erfindung werden nachstehend anhand der Zeichnung näher erläutert.

Es zeigen:

Fig. 2 und Fig. 3 zwei verschiedene Auswahlfolgen für eine lineare Auflösungsverringerung im Verhältnis 2:1.

Fig. 4 das Blockschaltbild einer Anordnung für die Erzeugung von Halbtonbildern mit verringerter Auflösung bei rein serieller Zuführung der Bildpunktsignale,

Fig. 5 das Blockschaltbild einer Anordnung für die parallele Verarbeitung einer Anzahl Bildpunktsignale,

Fig. 6 das Blockschaltbild einer vereinfachten Anordnung für eine bestimmte Auswahlfolge.

Anhand der Fig. 2 wird die Auswahlfolge für eine Auflösungsverringerung im Verhältnis 1:2 erläutert, d.h. aus einem ersten Pseudo-Halbtonbild wird ein zweites PseudoHalbtonbild mit der Hälfte der Bildpunkte in Zeilen-und Spaltenrichtung erzeugt. Dabei wird ausgegangen von einer Schwellwertmatrix, wie diese in Fig. 1 mit 21 bezeichnet ist, d.h. mit der dort angegebenen Größe und Verteilung der Schwellwerte. Diese Matrix ist hier quadratisch mit vier Zeilen und vier Spalten. Aus dieser Matrixgröße und dem Verhältnis der Auflösungsumwandlung ergibt sich, daß das Feld 24 in Fig. 2 ebenfalls quadratisch mit einer Größe von 8 x 8 Bildpunkten ist. In diesem Feld 24 sind anstelle der Werte der binären Bildpunktsignale die Schwellwerte als Dezimalzahl angegeben, die bei der Erzeugung der betreffenden Bildpunktwerte verwendet wurden. Das Bildfeld 24 umfaßt also vier Matrizen von Bildpunkten, die je mit der Matrix von Schwellwerten gewonnen wurden, und für die Auswahlfolge ist das Bildfeld 24 in 4 x 4 Unterfelder mit je 2 x 2 Bildpunkten (wie z.B. Unter feld 26) entsprechend dem Verhältnis derAuflösungsumwandlung eingeteilt. Das erste Pseudo-Halbtonbild besteht also aus einer Vielzahl von in gleicher Weise eingeteilten, aneinandergrenzenden Bildfeldern.

Für die Erzeugung der Bildpunktes zweiten Pseudo-Halbtonbildes mit verringerter Auflösung werden nun die mit Kreisen bezeichneten Bildpunkte ausgewählt. Dies sind also in der ersten und der dritten sowie der sechsten und der achten Bildzeile die ersten, dritten, sechsten und achten Bildpunkte. Wenn die zu den ausgewählten Bildpunkten gehörenden Schwellwerte in einer Matrix angegeben werden, wie das bei der Matrix 25 in Fig. 2 der Fall ist, ist zu erkennen, daß sich im wesentlichen die gleiche Struktur der Matrix 21 der Schwellwerte in Fig. 1 ergibt. Die vier mittleren Elemente sind jeweils diagonal vertauscht, und die mittleren Elemente an den Seiten sind untereinander vertauscht. Die Anwendung dieser Matrix 25 von Schwellwerten mit der angegebenen Verteilung auf das abgetastete Bild zur Erzeugung eines ersten Pseudo-Halbtonbildes mit hoher Auflösung ergibt praktisch genau den gleichen optischen Eindruck wie die Anwendung der Matrix 21 von Schwellwerten in Fig. 1. Die angegebene Auswahl der Bildpunkte zur Erzeugung eines Pseudo-Halbtonbildes mit verringerter Auflösung ergibt im praktischen Versuch auch keine wesentliche Änderung des optischen Gesamteindruckes, abgesehen von gewissen sehr feinen Detailverlusten, die jedoch prinzipiell unvermeidbar sind. Wenn im übrigen auf ein derartiges Pseudo-Halbtonbild mit verringerter Auflösung dasselbe Auswahlverfahren nochmals angewendet wird, um ein Pseudo-Halbtonbild mit linear vierfach verringerter Auflösung gegenüber dem ursprünglichen Pseudo-Halbtonbild zu erhalten, ist festzustellen, daß dann die zu den ausgewählten Bildpunkten gehörenden Schwellwerte eine Matrix bilden, die mit der Matrix 21 in Fig. 1 vollständig übereinstimmt.

In Fig. 3 ist eine andere Auswahlfolge angegeben, die von den gleichen Bedingungen ausgeht, d.h. Verringerung der Auflösung im Verhältnis 1:2 und der Schwellwertmatrix 21 in Fig. 1. Daher hat das Bildfeld 27 in Fig. 2 die gleichen Abmessungen wie das Bildfeld 24 in Fig. 1 und auch die gleiche Größe und Anzahl von Unterfeldern. Auch hier wird entsprechend der Verringerung der Auflösung im Verhältnis 1:2 aus jedem Unterfeld nur ein Bildpunkt ausgewählt, jedoch liegen diese Bildpunkte in benachbarten Unterfeldern stets an unterschiedlicher Stelle. Im Gegensatz zur Auswahlfolge nach Fig. 2 sind bei der Fig. 3 alle Zeilen und Spalten des Bildfeldes 27 berücksichtigt, und zwar gleichmäßig, d.h. aus jeder Zeile bzw. jeder Spalte werden zwei Bildpunkte ausgewählt.

Die zu den ausgewählten Bildpunkten gehörenden Schwellwerte sind in Fig. 3 als Matrix 28 dargestellt, und dabei sind auch die mittleren Elemente gegenüber der Ursprungsmatrix diagonal vertauscht, während die mittleren äußeren Elemente zyklisch vertauscht sind. Die Eckpunkte der Matrix sind dagegen unverändert, ebenso wie bei der Auswahlfolge nach Fig. 2.

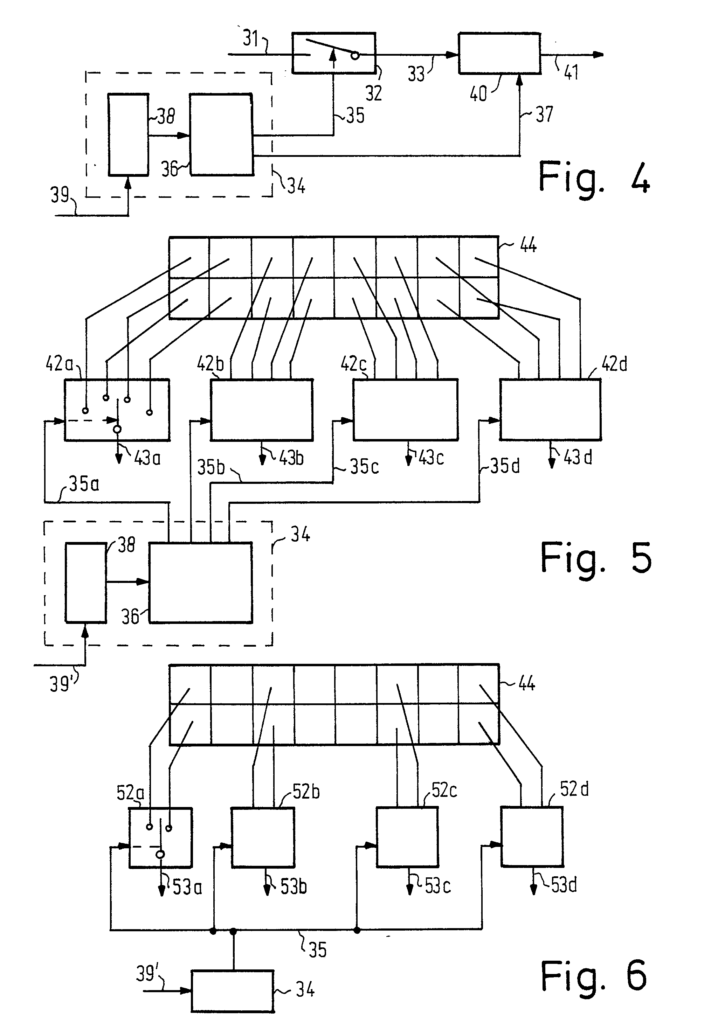

In Fig. 4 ist das Blockschaltbild einer allgemeinen Schaltungsanordnung angegeben, mit der die Auswahl der Bildpunkte durchgeführt werden kann. Dabei wird angenommen, daß dem Eingang 31 seriell die Bildpunktsignale der Bildzeilen des ersten Pseudo-Halbtonbildes zugeführt werden. Dieser Eingang 31 ist mit einem Datenschalter 32 verbunden, der von einer Steuereinrichtung 34 über die Leitung 35 angesteuert wird und entsprechend der gewünschten Auswahlfolge den Datenschalter 32 schließt, so daß die am Eingang 31 zugeführten Bildpunktsignale auf der Leitung 33 ausgegeben werden, oder den Datenschalter 32 öffnet.

Die auf der Leitung 35 abgegebenen Steuersignale zur Betätigung des Datenschalters 32 werden in der Steuereinrichtung 34 von einem Speicher 36 erzeugt, der von den Ausgängen eines Zählers 38 adressiert wird. Dieser Zähler 38 erhält über den Eingang 39 ein Zähltaktsignal, das synchron ist mit den dem Eingang 31 zugeführten Bildpunktsignalen. Der Inhalt des Speichers 36 entspricht somit direkt der Auswahlfolge, beispielsweise wie in Fig. 2 im Bildfeld 24 bzw. in Fig. 3 im Bildfeld 27 angegeben. Da die Auswahlfolge der Bildpunkte in nebeneinanderliegenden Bildfeldern gleich ist, braucht der Speicher 36 die Auswahlfolge jeder Zeile des Bildfeldes nur einmal zu enthalten, die während einer Zeile des gesamten ersten Pseudo-Halbtonbildes jeweils wiederholt wird. Dies kann bezogen auf die in Fig. 2 und Fig. 3 angegebenen Beispiele am einfachsten dadurch geschehen, daß nur die drei Bits niedrigster Wertigkeit am Ausgang des Zählers 38 zur Adressierung des Speichers 36 verwendet werden. Erst wenn der Zähler 38 die Bildpunkte einer ganzen Bildzeile gezählt hat, schaltet eine entsprechende Stufe dieses Zählers 38 weiter, deren Ausgang ebenfalls den Speicher 36 adressiert und einen anderen Bereich mit einer entsprechend anderen Folge von Steuersignalen auswählt, die dann wieder zyklisch für nebeneinanderliegende Bildfelder wiederholt werden. Auf diese Weise braucht der Speicher 36 in der Steuereinrichtung 34 nur so viele Speicherstellen aufzuweisen, wie das Bildfeld Bildpunkte hat.

Wie insbesondere bei der Auswahlfolge in Fig. 3 zu erkennen ist, treten die ausgewählten Bildpunktsignale auf der Leitung 33 nicht zeitlich gleichmäßig auf. Um eine zeitlich gleichmäßige Folge von Bildpunktsignalen zu erhalten, werden die vom Datenschalter 32 ausgewählten Bildpunktsignale einem FIFO-Speicher 40 zugeführt, der die empfangenen Signale in der zugeführten Folge speichern, jedoch zu anderen Zeitpunkten abgeben kann. Bei den Beispielen gemäß Fig. 2 und Fig. 3 ist die Häufigkeit der ausgewählten Bildpunkte im Mittel viermal kleiner als die Häufigkeit der zugeführten Bildpunkte, so daß der über die Leitung 37 zugeführte Auslesetakt des Speichers 40 ein Viertel der Frequenz des dem Eingang 39 zugeführten Taktsignals beträgt, d.h. das Auslesetaktsignal auf der Leitung 37 kann vom Zähler 38 abgeleitet werden. Am Ausgang 41 des Speichers 40 treten dann die ausgewählten Bildpunktsignale in gleichmäßiger Folge auf.

Bei dem Blockschaltbild nach Fig. 5 wird angenommen, daß die Bildpunktsignale eines ganzen Blockes 44 von Bildpunkten, die jeweils eine Zeile von Unterfeldern innerhalb eines Bildfeldes darstellen, parallel vorliegen. Für jedes Unterfeld ist dabei ein Datenschalter 42a, 42b, 42c bzw. 42d vorgesehen, der jeweils alle Bildpunktsignale eines Unterfeldes empfängt und davon ein Bildpunktsignal auswählt und am Ausgang 43a, 43b, 43c bzw. 43d abgibt. Die Auswahl wird über die Verbindungen 35a, 35b, 35c bzw. 35d gesteuert, die von der Steueranordnung 34 kommen. Da die Datenschalter 42a usw. jeweils ein Bildpunktsignal aus vier zugeführten Signalen auswählen, können sie als elektronische Multiplexer ausgeführt sein, die mittels zwei Bit gesteuert werden können, so daß jede der Verbindungen 35a usw. aus zwei Leitungen besteht. Wenn angenommen wird, daß die Bildpunktsignale der Bildpunkte jeweils gleicher Unterfelder von nebeneinanderliegenden Bildfeldern zugeführt werden, bleiben die Signale auf den Verbindungen 35a usw. konstant, bis zwei vollständige Bildzeilen verarbeitet sind. Der Speicher 36 innerhalb der Steuereinrichtung 34, der die Steuersignale auf den Verbindungen 35a usw. erzeugt, wird also jeweils erst nach zwei vollständigen Bildzeilen weitergeschaltet. Dazu braucht der Zähler 38, der den Speicher 36 ansteuert, an seinem Eingang 39' nur nach jeweils zwei vollen Bildzeilen ein Taktsignal erhalten. Stattdessen kann der Zähler 38 aber auch mit jedem neuen Bildfeld bzw. jeder neuen Gruppe 44 von Unterfeldern ein Taktsignal erhalten, und der Speicher 36 wird dann nur von den höherwertigen Stufen des Zählers 38 adressiert. Die ausgewählten Bildpunktsignale treten an den Ausgängen 43a usw. in zeitlich regelmäßiger Folge auf, wenn das Zuführen der Bildsignale von den Gruppen 44 von Unterfeldern zeitlich regelmäßig erfolgt.

Bei dem Auswahlverfahren nach Fig. 2 ist zu erkennen, daß die ausgewählten Bildpunkte nur an bestimmten Zeilen und Spalten des Bildfeldes 24 liegen, d.h. bestimmte Zeilen und Spalten des gesamten ersten Pseudo-Halbtonbildes werden überhaupt nicht verwendet. Die entsprechenden Bildpunktsignale brauchen dann auch gar nicht erst den Datenschaltern zugeführt zu werden. Für diesen Fall zeigt die Fig. 6 im Blockschaltbild eine besonders einfache Anordnung. Es sind wieder vier Datenschalter 52a, 52b, 52c und 52d vorhanden, die jedoch nur je zwei Eingänge haben. Für das gemeinsame Umschalten der Datenschalter 52a usw. genügt dann nur eine einzige Steuerleitung, deren Signal nach jeweils vier vollständigen Bildzeilen, d.h. nach zwei Zeilen von Gruppen 44 von Unterfeldern, umgeschaltet werden muß. Dadurch ist in der Steuereinrichtung 34 kein Speicher mehr erforderlich, sondern das Steuersignal für die Datenschalter 52a usw. kann direkt vom Zähler 38 abgeleitet werden, und zwar abhängig von dem Taktsignal auf der Leitung 39' bzw. dessen Frequenz von einer bestimmten Stufe dieses Zählers. Dadurch ergibt sich eine besonders einfache Ausführung.

Die Durchführung des angegebenen Verfahrens zur Auflösungsumwandlung von Pseudo-Halbtonbildern kann auch mit Hilfe eines Mikroprozessors erfolgen, beispielsweise indem die Adressen für einen Speicher, der die Bildpunktwerte des ersten Pseudo-Halbtonbildes enthält, für die auszuwählenden Bildpunkte berechnet werden.

Grundsätzlich ist das angegebene Verfahren für die Auswahl von bestimmten Bildpunkten auch verwendbar, wenn die Auflösung des zweiten Pseudo-Halbtonbildes größer sein soll, indem die ausgewählten Bildpunkte verdoppelt oder auch stärker vervielfacht werden, als die nicht ausgewählten Punkte. Die dadurch entstehenden zweiten Pseudo-Halbtonbilder mit in diesem Falle höherer Auflösung sind dann ebenfalls dem ersten Pseudo-Halbtonbild im optischen Gesamteindruck sehr ähnlich.

**Ansprüche**

1. Verfahren zum Umwandeln eines Pseudo-Halbtonbildes aus einer Matrix von binären Bildpunkten, deren Werte gemäß dem Ordered Dither-Verfahren aus der Abtastung einer Vorlage und Vergleich des Abtastsignals von jeweils in einer Matrix mit i Zeilen und j Spalten angeordneten Bildpunkten mit einem Satz von verschiedenen Schwellwerten, die ebenfalls in einer Matrix angeordnet sind, gewonnen sind, in ein zweites Pseudo-Halbtonbild derart, daß $n^2$ Bildpunkten des ersten Bildes $m^2$ Punkte des zweiten Bildes entsprechen, mit $m \neq n$, vorzugsweise $m < n$, dadurch gekennzeichnet, daß das erste Bild in aneinandergrenzende Bildfelder von je i.n x j.n Bildpunkten mit aneinandergrenzenden quadratischen Unterfeldern von je n x n Bildpunkten aufgeteilt wird und daß aus jeweils einem Unterfeld $m^2$ Bildpunkte für das zweite Bild nach einer für jedes Bildfeld gleichen festen Auswahlfolge und nur abhängig von der Lage des Unterfeldes im Bildfeld derart ausgewählt werden, daß Bildpunkte von allen Positionen der Matrix im wesentlichen gleich oft berücksichtigt sind.

2. Verfahren nach Anspruch 1, dadurch gekennzeichnet, daß die Bildpunkte für das zweite Bild aus allen Zeilen und allen Spalten des Bildfeldes des ersten Bildes ausgewählt werden.

3. Verfahren nach Anspruch 1, dadurch gekennzeichnet, daß die Bildpunkte für das zweite Bild aus nur einigen Zeilen und/oder einigen Spalten des Bildfeldes des ersten Bildes ausgewählt werden.

4. Verfahren nach Anspruch 3, dadurch gekennzeichnet, daß nur die an Kreuzungspunkten von einem Teil der Zeilen und Spalten liegenden Bildpunkte des Bildfeldes des ersten Bildes für das zweite Bild ausgewählt werden.

5. Verfahren nach Anspruch 1 oder einem der folgenden, dadurch gekennzeichnet, daß die Auswahl der Bildpunkte für das zweite Bild und die Anordnung der aus einem Bildfeld ausgewählten Bildpunkte in Form einer Ausgangsmatrix derart erfolgt, daß diese im wesentlichen der Matrix der Bildpunkte des ersten Bildes entspricht.

6. Anordnung zur Durchführung des Verfahrens nach Anspruch 1 oder einem der folgenden, mit mindestens einem Eingang zum Zuführen der Bildpunktsignale aufeinanderfolgender Bildpunkte des ersten Pseudo-Halbtonbildes und mit mindestens einem Ausgang zum Abgeben der Bildpunktsignale der Bildpunkte des zweiten Pseudo-Halbtonbildes, dadurch gekennzeichnet, daß jedem Eingang ein Datenschalter (32; 42a, 42b...) nachgeschaltet ist und daß eine Steuereinrichtung (34) vorgesehen ist, die von mit dem Empfangen der Bildpunktsignale des ersten Bildes synchronen Taktsignalen gesteuert die Datenschalter zyklisch betätigt, wobei die Zyklusdauer dem Empfangen der Bildpunktsignale aus jeweils einer vorgegebenen Anzahl Bildzeilen eines Bildfeldes oder einer Zeile von Bildfeldern entspricht und der Zyklus nach einer vorgegebenen zweiten Anzahl von Bildzeilen geändert wird, und die Datenschalter entsprechend der Betätigung die den Eingängen zugeführten Bildpunktsignale unterdrücken oder zum Ausgang (33; 43a, 43b...) weiterleiten.

7. Anordnung nach Anspruch 6, dadurch gekennzeichnet, daß die Steuereinrichtung (34) einen Speicher (36) enthält, der von einem Zähler (38) adressiert ist, der die Taktsignale als Zählsignale empfängt.

8. Anordnung nach Anspruch 6 oder 7 mit mehreren Eingängen zum parallelen Zuführen von Bildpunktsignalen aus jeweils einer Gruppe von benachbarten Bildzeilen, dadurch gekennzeichnet, daß mehrere Datenschalter (42a, 42b...) vorhanden sind, die je die Bildsignale eines anderen Unterfeldes eines Bildfeldes empfangen und daraus entsprechend den Steuersignalen der Steueranordnung (34) bestimmte Bildsignale davon auswählen und an Ausgängen (43a, 43b...) parallel abgeben, und daß die Steueranordnung (34) die Betätigung der Datenschalter erst nach Empfang einer vorgegebenen Anzahl von Gruppen von Bildzeilen ändert.

9. Anordnung nach Anspruch 6 zur Durchführung des Verfahrens nach Anspruch 3 oder 4,

dadurch gekennzeichnet, daß mehrere Datenschalter (52a, 52b...) vorhanden sind, die Bildpunktsignale nur von solchen Zeilen und/oder Spalten mehrerer nebeneinanderliegender Unterfelder empfangen, aus denen mindestens ein Bildpunkt für das zweite Bild ausgewählt wird, und daß die Steuereinrichtung (34) ein Zähler (54) ist, der die Datenschalter (52a, 52b...) direkt steuert und mit jeder neuen Zeile bzw. Gruppe von Zeilen weiterschaltet.

Fig. 1

Fig. 2

Fig. 3

Fig. 4

Fig. 5

Fig. 6